# EUROPÄISCHE PATENTSCHRIFT

(11) **EP 4 128 448 B1**
(45) Veröffentlichungstag und Bekanntmachung des Hinweises auf die Patenterteilung: **05.08.2026**
(21) Anmeldenummer: 21713570.6
(22) Anmeldetag: 08.03.2021
(51) Int. Cl.: H01R 31/02, H01R 25/16, H01R 13/518, H01R 11/09, H02G 3/00, H02G 5/00, B61G 5/10, H01R 13/52

(54) **HOCHLEISTUNGSSTECKVERBINDERSYSTEM**
HIGH-POWER PLUG CONNECTION SYSTEM
SYSTÈME DE CONNEXION À FICHE À HAUTE PUISSANCE

(30) Priorität: 27.03.2020 DE 102020108458
(43) Veröffentlichungstag der Anmeldung: 08.02.2023
(73) Patentinhaber: HARTING Electric Stiftung & Co. KG, 32339 Espelkamp (DE)
(72) Erfinder: HELLIGE, Denny, 32339 Espelkamp (DE); GERSTL, Walter, 32339 Espelkamp (DE); FERDERER, Albert, 32339 Espelkamp (DE)
(74) Vertreter: Eisenführ Speiser
(86) Internationale Anmeldenummer: PCT/DE2021/100235
(87) Internationale Veröffentlichungsnummer: WO 2021/190698

(56) Entgegenhaltungen:
- EP-A1- 2 665 147
- EP-A1- 2 665 147
- EP-A1- 2 746 129
- EP-A1- 2 746 129
- EP-A1- 3 470 296
- EP-A1- 3 470 296
- CN-U- 202 363 597
- CN-U- 202 363 597
- DE-B3- 102017 222 101
- DE-B3- 102017 222 101
- DE-U1- 202011 050 247
- DE-U1- 202011 050 247
- US-A- 4 891 016
- US-A- 4 891 016
- US-A- 5 679 016
- US-A- 5 679 016

## Beschreibung

Die Erfindung geht aus von einem Hochleistungssteckverbindersystem nach der Gattung des unabhängigen Anspruchs 1.

Derartige Hochleistungssteckverbindersysteme werden benötigt, um hohe elektrische Spannungen und hohe elektrische Ströme zu übertragen und/oder zu verteilen. Besonders liegt dabei das Augenmerk auf der Anwendbarkeit in Unterflurbereichen schienengebundener Fahrzeuge, insbesondere der Verbindung von Triebwagen und Triebwaggons untereinander.

### Stand der Technik

Im Stand der Technik sind Lösungen bekannt, welche die Übertragung und/ oder Verteilung hoher elektrische Ströme und/ oder Spannung zwischen Fahrzeugen untereinander oder zwischen Fahrzeugen mit angehängten Modulen ermöglichen. Diese Lösungen sehen jedoch zumeist eine unvorteilhafte und zum Teil unlösbare Fixierung der entsprechenden Kontaktelemente vor. Weiterhin

Besonders nachteilig an dem Stand der Technik ist die fehlende Wartungsfreundlichkeit, die starre Auslegung des Systems und in der Regel auch ein hohes Gewicht und beträchtlicher Platzbedarf. Durch den hohen Strombedarf im modernen, personenbefördernden Schienenverkehr ist die bisherige Lösung aus dem Stand der Technik überholt und ineffizient. Grade bei stark beanspruchten Kontaktelementen, wie beispielsweise im Bereich des schienengebundenen Verkehrs kommt es aufgrund immer höherer Anforderungen jedoch vermehrt zu Reparatur und Wartungsbedarf, beispielsweise durch erhöhte Elektroerosion oder Elektrokorrosion aufgrund der hohen Stromstärken von über 500A bis zu ein paar tausend Ampere und Spannungen von über 500V bis zu mehreren Kilovolt.

Das Deutsche Patent- und Markenamt hat in der Prioritätsanmeldung zu vorliegender Anmeldung den folgenden Stand der Technik recherchiert: DE 41 35 391 C1.

Die EP 3 470 296 A1 eröffnet ein Hochspannungsverbindungssystem zum elektrischen Verbinden zweier relativ zueinander beweglicher Objekte, insbesondere gekoppelter Eisenbahnwagen, wobei das Verbindungssystem ein flexibles Kabel und eine Verbindungsanordnung zur elektrischen Kontaktierung eines Endes des einen flexiblen Kabels und eine Kabelhalteranordnung umfasst, wobei die Kabelhalteranordnung zum gleitenden Halten des flexiblen Kabels ausgebildet ist.

Die US 4,891,016 A eröffnet ein Hochspannungs-Steckverbindersystem mit Stift-Buchse Verbindern, welches mittels einem sogenannten "Hot-Stick" verbunden, beziehungsweise getrennt werden kann, wodurch der Verbindungsvorgang, beziehungsweise der Trennvorgang von Hochspannungsleiter und Hochspannungsquelle sicher vorgenommen werden kann.

### Aufgabenstellung

Die Aufgabe der Erfindung besteht darin, einen vielseitig einsetzbaren Hochleistungssteckverbinder für die Übertragung und/ der Verteilung hoher Ströme und/ oder Spannungen anzubieten.

Die Aufgabe wird durch den Gegenstand des unabhängigen Anspruchs 1 gelöst.

Vorteilhafte Ausgestaltungen der Erfindung sind in den Unteransprüchen und der folgenden Beschreibung angegeben.

Die erfindungsgemäße Ausführungsform schlägt ein Hochleistungssteckverbindersystem nach Anspruch 1 aufweisend ein Kabelanschlussgehäuse zum Anschluss von zumindest zwei elektrischen Hochleistungssteckverbindern zur Übertragung und/oder Verteilung hoher elektrischer Stromstärke und/ oder hoher elektrischer Spannung vor. Das Kabelanschlussgehäuse ist zur Aufnahme von zumindest zwei Isolierkörpern und zumindest einer elektrisch leitfähigen Schiene in einem Innenraum ausgelegt. Dabei sind die Isolierkörper zur Aufnahme zumindest je eines Hochleistungskontaktes und die Schiene zur Herstellung einer elektrisch leitenden Verbindung zwischen den zumindest zwei Hochleistungskontakten vorgesehen. Die Isolierkörper ragen weiterhin zumindest teilweise durch je einen Gehäusedurchbruch aus dem Innenraum in einen Anschlussbereich, wobei der Anschlussbereich zur Aufnahme der Hochleistungssteckverbinder ausgebildet ist und wobei der Innenraum zumindest einen erste Isolierschale und eine zweite Isolierschale aufweist, wobei die erste Isolierschale und die zweite Isolierschale sich entlang zumindest einer Seitenwand überlagern.

Das Kabelanschlussgehäuse ist also zumindest als Kupplung für zumindest zwei Hochleistungssteckverbinder einsetzbar. Idealerweise ist ein erfindungsgemäßes Kabelanschlussgehäuse als Verteiler ausgebildet.

Insbesondere ist das Kabelanschlussgehäuse als Y-Verteiler ausgebildet. Vorteilhafter Weise ist das Kabelanschlussgehäuse als T-Verteiler ausgebildet. Weiterhin vorteilhaft ist das Kabelanschlussgehäuse als H-Verteiler ausgebildet. Ebenfalls denkbarer Weise ist das Kabelanschlussgehäuse als X-Verteiler ausgebildet.

Der Begriff "Hochleistungssteckverbinder" meint einen Steckverbinder, welcher zum Anschluss an das Kabelanschlussgehäuse vorgesehen ist. Insbesondere ist ein erfindungsgemäßer Hochleistungssteckverbinder als einpoliger Steckverbinder ausgeführt. Derartige Hochleistungssteckverbinder werden auch als Single-Pol Der Hochleistungssteckverbinder ist vor allem dazu ausgelegt, eine hohe elektrische Stromstärke und/ oder eine hohe elektrische Spannung an das Kabelanschlussgehäuse zu übertragen.

Als "hohe elektrische Stromstärke" ist eine Stromstärke von über 100 Ampere gemeint. Insbesondere ist eine Stromstärke von über 500 Ampere gemeint. Ganz besonders ist eine Stromstärke von über 800 Ampere gemeint. Denkbar ist auch eine Stromstärke von größergleich 1.000 Ampere.

Unter dem Begriff "hohe elektrische Spannung" ist eine Spannung von über 1 Kilovolt zu verstehen. Insbesondere ist eine Spannung von über 10 Kilovolt gemeint. Ganz besonders ist eine Spannung von über 15 Kilovolt gemeint. Denkbar ist auch eine Stromstärke von größergleich 25 Kilovolt.

Als "Gehäusedurchbruch" ist eine Öffnung im Kabelanschlussgehäuse gemeint. Dieser Gehäusedurchbruch führt von einem Innenraum des Kabelanschlussgehäuses in den umgebenden Außenbereich. Der das Kabelanschlussgehäuse umgebende Außenbereich ist zumindest in der Umgebung der Gehäusedurchbrüche als Anschlussbereich ausgeführt.

Als "Anschlussbereich" ist der zuvor genannte Außenbereich des Kabelanschlussgehäuses zu verstehen. Der Anschlussbereich ist dabei erfindungsgemäß derart ausgeformt, dass ein Hochleistungssteckverbinder an einen sich in einem Gehäusedurchbruch befindlicher Isolierkörper herangeführt und mit diesem elektrisch Leitend verbunden wird. Durch die Verbindung eines Hochleistungssteckverbinders mit dem Anschlussbereich wird erfindungsgemäß eine mediendichte Versiegelung des Innenraums an der entsprechenden Stelle geschaffen. Dazu ist das Gehäuse des Hochleistungssteckverbinders derart ausgeformt, dass das Gehäuse in einen grundsätzlich kongruent gestalteten Anschlussbereich eingreift. Zur verbesserten Versiegelung sind sowohl besagter Hochleistungssteckverbinder und/ oder der Anschlussbereich des Kabelanschlussgehäuses mit einer Dichtung versehen.

Erfindungsgemäß ist das Kabelanschlussgehäuse mit einer grundsätzlich konkav ausgeformten Gehäuseoberseite ausgeführt.

Als Gehäuseoberseite ist in diesem Zusammenhang insbesondere die Gehäusewand zu verstehen, welche mit einer der Gehäuseoberseite gegenüberliegenden Trägerstruktur, beispielsweise eines Fahrzeugs oder eines angehängten Transportelements, verbunden ist. Dabei eröffnet ein Ausführungsbeispiel eine Gehäuseoberseite, deren konkave Form von einer linken zu einer rechten Seite verläuft. Eine höchste Auslenkung der konkaven Form befindet sich also entlang einer grundsätzlich mittig angeordneten Längsachse des Kabelanschlussgehäuses. Die höchste Auslenkung der konkaven Form der Gehäuseoberseite ist entlang einer grundsätzlich mittig angeordneten Querachse des Kabelanschlussgehäuses ausgerichtet. Die höchste Auslenkung der konkaven Form der Gehäuseoberseite ist idealerweise grundsätzlich im Bereich eines Mittelpunkts des Kabelanschlussgehäuses angeordnet. Als Mittelpunkt kann ein Punkt gewählt werden, welcher als Schnittpunkt der Längsachse und der Querachse definiert ist. Eine konkave Gehäuseoberseite hat zunächst den Vorteil, dass Fremdmedien, insbesondere Wasser, Schmutz und Staub einfach von der Gehäuseoberseite abfließen, bzw. heruntergespült werden können.

Eine Ausführungsform sieht vor, dass das Kabelanschlussgehäuse über zumindest zwei Ausnehmungen verfügt, welche es ermöglichen, dass Kabelanschlussgehäuse mit einer Trägerstruktur zu verbinden.

Als Ausnehmungen sind beispielsweise Vertiefungen gemeint, welche Bolzen, Stifte, Schrauben, Gewindestifte oder vergleichbare Verbindungselemente in sich aufnehmen können. Beispielsweise ist eine solche Ausnehmung als Nut entlang einer Außenseite des Kabelanschlussgehäuses ausgeführt. Dabei kann die Nut derart profiliert sein, dass die Nut eine nach außen weisende Öffnung aufweist, in die ein Verbindungselement ganz oder zumindest teilweise durchführbar ist.

Die Ausnehmungen sind alternativ als Durchgangsloch ausgeführt, welche Bolzen, Stifte, Schrauben, Gewindestifte oder vergleichbare Verbindungselemente durch sich hindurchführen lassen. Die Ausnehmung ist beispielsweise als Durchgangsbohrung ausgeführt. Die Ausnehmung ist alternativ als Sacklochbohrung ausgeführt. Die Ausnehmung ist optional als Langloch ausgeführt.

Als Trägerstruktur ist beispielsweise ein Bodenblech eines schienengebundenen Fahrzeugs zu verstehen. Ein weiteres Beispiel für eine Trägerstruktur ist ein Stahlträger, welcher zur Verbindung mit einem Kabelanschlussgehäuse ausgelegt ist. Darüber hinaus kann eine Trägerstruktur aus einem anderen, tragfähigem Material ausgebildet sein. Idealerweise ist die Trägerstruktur aus einem elektrisch leitfähigem Material ausgebildet. Besonders vorteilhaft ist eine Trägerstruktur, welche über einen vorteilhaften Wärmeleitkoeffizienten verfügt. Dabei ist mit "vorteilhaftem Wärmeleitkoeffizienten" eine hohe Wärmeleitfähigkeit gemeint.

Als Isolierschale ist ein Formelement gemeint, welches aus einem nichtleitenden Material, insbesondere aus einem Kunststoff, geformt ist. Dabei geht die Erfindung von einer grundsätzlich rechteckigen Grundfläche der Isolierschale aus. Alternativ ist die Grundfläche der Isolierschale polygonal ausgeführt. Eine Grundfläche ist alternativ mit einer Kreisrunden Grundfläche ausgeführt. Die Isolierschale nimmt also eine hohlzylindrische Form an.

An den Umfangsseiten der Grundfläche sind zumindest in etwa senkrecht angeformte Seitenwände angeordnet. Erfindungsgemäß überlagern sich dabei grundsätzlich die Isolierschalen an zumindest einer, vorteilhafterweise an zumindest zwei Seitenwänden. Idealerweise sind die Grundflächen einer ersten Isolierschale und einer zweiten Isolierschale hierbei in etwa kongruent und/ oder unterscheiden sich in Ihrer Grundfläche nur um die Stärke der korrespondierenden Isolierschale. Damit ist gemeint, dass beispielsweise die erste Isolierschale eine Größere Grundfläche aufweist, als die zweite Isolierschale, oder anders herum. Der Unterschied der Grundflächen der ersten Isolierschale und der zweiten Isolierschale ermöglicht also, dass die erste Isolierschale die zweite Isolierschale zumindest teilweise in sich aufnehmen kann. Erfindungsgemäß wird eine erste Isolierschale in den Innenraum des Kabelanschlussgehäuses gelegt. Die zweite Isolierschale wird um eine Achse gespiegelt in die erste Isolierschale eingesetzt, sodass grundsätzlich ein Raum zwischen der ersten Isolierschale und der zweiten Isolierschale eingeschlossen wird. Geschickter Weise wird durch diese Dimensionierung und/ oder Anordnung ermöglicht, dass die Isolierschalen eine Verschachtelung der Seitenwände und damit eine positive Erhöhung der erforderlichen Luftstrecken und Kriechstrecken erwirken. In einer sinnvollen Ausführungsform werden die Ausnehmungen jeweils innerhalb zumindest einem, außen an dem Kabelanschlussgehäuse befindlichen Fortsatz angeordnet.

Als Fortsatz ist hierbei beispielsweise ein an dem Kabelanschlussgehäuse angebrachtes Blech gemeint. Der Fortsatz ragt insbesondere über die Grundform des Kabelanschlussgehäuses hinaus. Besonders bevorzugt wird ein Kabelanschlussgehäuse, dessen Gehäuseoberseite mit Fortsätzen ausgeformt ist. Idealerweise ist die Gehäuseoberseite grundsätzlich rechteckig ausgeformt. Die Gehäuseoberseite weist dabei an zwei sich gegenüberliegenden Seiten je zumindest einen Fortsatz mit je zumindest einer Ausnehmung zur Befestigung des Kabelanschlussgehäuses auf.

Besonders bevorzugt wird ein Kabelanschlussgehäuse mit polygonaler Grundform und einer grundsätzlich rechteckigen Gehäuseoberseite. Dabei ragt die Gehäuseoberseite über zumindest einer Seite der polygonalen Grundform des Kabelanschlussgehäuses hervor, wobei die Ausnehmung in diesem, derart gebildeten, hervorragenden Fortsatz angeordnet ist.

Erfindungsgemäß ist vorgesehen, dass der Innenraum zumindest einen erste Isolierschale und eine zweite Isolierschale aufweist, wobei die erste Isolierschale und die zweite Isolierschale sich entlang zumindest einer Seitenwand überlagern.

Eine clevere Ausführungsform sieht vor, dass das Kabelanschlussgehäuse zumindest eine Verschlusskappe zum mediendichten Verschließen eines Anschlussbereichs aufnimmt. Als Verschlusskappe ist in diesem Fall eine Kappe oder ein Deckel gemeint, welche/r dazu ausgeformt ist, zumindest einen Anschlussbereich des Kabelanschlussgehäuses zu bedecken. Als Verschlusskappe ist weiterhin eine Kappe oder ein Deckel gemeint welcher in den Anschlussbereich hineingeführt werden kann, wobei zumindest ein Gehäusedurchbruch versiegelt wird. Idealerweise ist die Verschlusskappe derart geformt, dass sie in einen Anschlussbereich eingesetzt wird und in dem Anschlussbereich fixiert wird. Die Fixierung der Verschlusskappe ist erfindungsgemäß zumindest in der Lage, eine Wasserundurchlässigkeit und/ oder eine Staubundurchlässigkeit zu erwirken. Geschickter Weise ist die Verschlusskappe und/ oder der Anschlussbereich mit einem Dichtelement versehen, um die dichtende Wirkung zu verbessern.

Eine weiterentwickelte Ausführungsform sieht vor, dass das Kabelanschlussgehäuse einen Gehäusedeckel zum mediendichten Verschließen des Innenraums aufweist. Der Gehäusedeckel wird geschickter Weise an einer Gehäuseunterseite angeordnet. Die Verbindung des Gehäusedeckels mit dem Kabelanschlussgehäuse dichtet den Innenraum des Kabelanschlussgehäuses erfindungsgemäß zumindest gegen das Eindringen von Wasser und/ oder Staub und Schmutz ab. Durch den Einsatz des Gehäusedeckels ist ein Wartungszugang eingerichtet. Erfindungsgemäß wird der Gehäusedeckel mit einem Verbindungselement versehen, welches zum Lösen des Gehäusedeckels vom Kabelanschlussgehäuse ein Spezialwerkzeug benötig. Denkbar ist auch der Einsatz eines Verschlussmechanismus. Auf diese Weise wird ein grundsätzlicher Manipulationsschutz erwirkt. Um den Manipulationsschutz zu verbessern kann der Gehäusedeckel in der Gehäuseoberseite vorgesehen werden. Erfindungsgemäß wird der Gehäusedeckel folglich mit einer zumindest teilweise konkaven Form ausgeführt. Geschickter Weise ist der Gehäusedeckel und/ oder der korrespondierende Teil des Kabelanschlussgehäuses mit einem Dichtelement versehen, um die abdichtende Wirkung gegen Fremdmedien zu verbessern.

Eine praktische Ausführungsform sieht vor, dass der Gehäusedeckel eine Vertiefung zur Aufnahme einer Verschlusskappe aufweist. Dabei ist zur Platzersparnis und zur Vereinfachung der Erreichbarkeit der Verschlusskappe die Anordnung des Gehäusedeckels auf der Gehäuseunterseite sinnvoll. Dabei wird die Verschlusskappe mit einem Verbindungselement an dem Gehäusedeckel lösbar gesichert. Diese Ausführungsform ist besonders gewieft, bei als Verteiler ausgelegtem Kabelanschlussgehäuse. Ist beispielsweise das Hochleistungssteckverbindersystem als Y-Verteiler ausgeführt, lässt sich das eingesetzte Kabelanschlussgehäuse auf einfache Weise mehrzweckerfüllend einsetzen. In einem Einsatz wird das als Y-Verteiler ausgeführte Hochleistungssteckverbindersystem als Verteiler einsetzen, indem zumindest drei Hochleistungssteckverbinder mit dem Kabelanschlussgehäuse verbinden lassen. In einem alternativen Einsatz wird das als Y-Verteiler ausgeführte Hochleistungssteckverbindersystem als Verbindung eingesetzt. Dazu werden zwei Hochleistungssteckverbinder mit dem Kabelanschlussgehäuse verbunden und ein dritter Anschlussbereich des Kabelanschlussgehäuses wird mit einer Verschlusskappe abgedichtet.

Erfindungsgemäß ist vorgesehen, dass das Kabelanschlussgehäuse zumindest auf der Gehäuseoberseite mit zumindest zwei grundsätzlich planen Kontaktflächen versehen ist. Geschickter Weise werden die Fortsätze der Gehäuseoberseite als plane Kontaktflächen ausgeformt. Diese Kontaktflächen werden idealerweise mit ebenfalls planen Flächen verbunden und an diesen planen Flächen durch Verbindungselemente, wie Schrauben, oder ähnlichen Verbindungselementen, befestigt. In Bezug auf Sicherheit wird vorgeschlagen, die Kontaktflächen und die Flächen unbehandelt miteinander zu verbinden. Denkbar ist auch eine Verbindung mit einer leitenden, korrosionsverhindernden Substanz. Dadurch wird eine Masseübertragung ermöglicht ohne weitere Masseleiter zu benötigen. Tests haben ergeben, dass bereits drei Schraubverbindungen, beispielsweise als M8 Gewinde oder größer ausgeführt, ausreichen, um einen Masseübertragung von 150A zu erreichen. Zusätzlich können die Kontaktflächen zur redundanten Sicherheit eingesetzt werden, um beispielsweise korrodierende Schraubverbindungen auszugleichen. Idealerweise können die Kontaktflächen zum Wärmeübertrag genutzt werden. Durch diese zusätzliche Wärmeübertragung kann eine besonders kompakte Bauform geschaffen werden, da dem Kabelanschlussgehäuse weniger Bauraum als Kühlfläche zugewiesen werden muss.

Erfindungsgemäß ist vorgesehen, dass die Kontaktflächen zumindest eine Höhe einer Ebene erreichen, welche aus einer grundsätzlich parallel zum Kabelanschlussgehäuse verlaufenden Geraden und durch einen höchsten Punkt der konkaven Auslenkung der Gehäuseoberseite gebildet wird.

Damit ist gemeint, dass die Kontaktflächen zumindest die gleiche Höhe erreichen, wie die zumindest eine konkave Ausformung in ihrer maximalen vom Kabelanschlussgehäuse wegweisenden Auslenkung. Bevorzugt ragen die Kontaktfläche über die maximale Auslenkung der konkav ausgeformten Gehäuseoberseite hinaus. Dadurch kann die Reinigung im montierten Zustand des Hochleistungssteckverbindersystems und insbesondere des Kabelanschlussgehäuses verbessert und vereinfacht werden. Darüber hinaus bedingt eine derart begünstigte Spaltbildung zwischen der konkaven Gehäuseoberfläche und der das Hochleistungssteckverbindersystem aufnehmende Trägerstruktur eine verbesserte Luftzirkulation. Diese Luftzirkulation wiederum bedingt einen positiven Kühlungseffekt. Durch diesen Kühlungseffekt kann eine kompakte Bauform geschaffen werden, da dem Kabelanschlussgehäuse weniger Bauraum als Kühlfläche zugewiesen werden muss.

Erfindungsgemäß wird vorgesehen, dass die Gehäuseunterseite mit zumindest einer grundsätzlich planen Kontaktfläche versehen ist. Diese Kontaktfläche ist zum Anschluss eines Masseleiters ausgeformt. Bekanntermaßen werden als Masseleiter häufig Kupferbänder eingesetzt. Diese Masseleiter können als zusätzliche Sicherheit zur Schirmübertragung eingesetzt werden. Weiterhin können derartige Masseleiter als Alternative zu planen Kontaktflächen an der Gehäuseoberseite eingesetzt werden.

Eine weitere Ausführungsform sieht vor, dass die Gehäuseoberseite aus zumindest einer grundsätzlich rechteckigen Grundform gebildet ist. Weiterhin sieht diese Ausführungsform vor, dass die Gehäuseunterseite aus zumindest einer grundsätzlich rechteckigen Grundform gebildet ist. Besonders bevorzugt wird eine weiterentwickelte Ausführungsform, deren Gehäuseunterseite aus zumindest einer grundsätzlich rechteckigen Grundform und einer daran angeordneten grundsätzlich trapezförmigen Grundform gebildet ist. Die dadurch entstehende polygone Grundform eignet sich besonders für den Einsatz des Hochleistungssteckverbindersystems als Verteiler. Insbesondere bei der Anwendung des Hochleistungssteckverbindersystems als Y-Verteiler bringt die Ausformung der Grundform als Polygon Vorteile bezüglich des Volumens des Kabelanschlussgehäuses.

Eine wartungsfreundliche Ausführungsform sieht dabei außerdem vor, dass ein Hochleistungssteckverbindersystem zumindest ein thermochromes Element beinhaltet. Bevorzugt wird ein thermochromes Element in Form eines Aufklebers eingesetzt. Alternativ wird ein thermochromes Element in Form zumindest eines Lackes eingesetzt. Ganz besonders wird bevorzugt, das thermochrome Element unterhalb einer schützenden, bzw. versiegelnden Lackschicht auf zumindest ein Bauteil des Hochleistungssteckverbindersystems aufzubringen. Zum Zwecke zeitiger Fehlererkennung und verbesserter Wartung wird hierbei vorgeschlagen, ein thermochromes Element mit irreversiblem Farbwechsel einzusetzen. Auf diese Weise kann ein Bauteil des Hochleistungssteckverbindersystems, welches einmal überbelastet wurde, direkt bei Wartungsarbeiten identifiziert werden. In einer geschickten Weiterentwicklung wird dem thermochromen Element ein elektrischer und/ oder elektromagnetischer Signalgeber zugeordnet. Dabei ist ein Signalgeber insbesondere als RFID-Transponder ausgeführt. Besonders bevorzugt wird auch bei dem Einsatz eines RFID-Transponders ein darin eingebrachtes Element zur irreversiblen Veränderung der übermittelten Daten. So kann beispielsweise ein hitzeempfindliches Element in dem Transponder enthalten sein. Als alternative wird ein RFID-Transponder mit einem hitzeempfindlichen Element verbunden. Sobald das hitzeempfindliche Element aktiviert und/ oder zerstört ist, beispielsweise durch zu hohe Temperatur, wird das Signal des RFID-Transponders verändert, sodass eine Fehlfunktion nachgewiesen werden kann.

Die Erfindung betrifft darüber hinaus ein Stromübertragungssystem umfassend zumindest fünf erfindungsgemäße Hochleistungssteckverbindersysteme. Die Hochleistungssteckverbindersysteme sind an zumindest einem Segment eines aus mehreren Segmenten bestehenden Transportsystems fixiert und nehmen zumindest einen elektrischen Leiter zwischen sich auf.

Als Stromübertragungssystem ist in diesem Fall also insbesondere ein Einsatz von zumindest fünf erfindungsgemäßen Hochleistungssteckverbindersystemen zu verstehen. Als Segment eines Transportsystems ist insbesondere ein Teil eines aus zumindest zwei Segmenten bestehenden Fahrzeugsystems, beispielsweise ein Gelenkbus, insbesondere ein Oberleitungsbus als Gelenkbus ausgeführt. Besonders bevorzugt wird ein Segment als Wagon eines schienengebundenen Fahrzeugs und/oder Fahrzeugverbund verstanden. Ein erstes Hochleistungssteckverbindersystem ist an einem ersten Ende des Segments des Transportsystems angebracht und zumindest ein zweites Hochleistungssteckverbindersystem ist in etwa einem mittigen Bereich des Segments zugeordnet.

Weiterhin ist zumindest ein drittes Hochleistungssteckverbindersystem an einem zweiten Ende des Segments des Transportsystems angebracht ist. Zumindest dem ersten Hochleistungssteckverbindersystem an dem ersten Ende des Segments des Transportsystems ist zumindest ein viertes, grundsätzlich baugleiches Hochleistungssteckverbindersystem zur Ermöglichung einer sicherheitstechnischen Redundanz zugeordnet. Dem dritten Hochleistungssteckverbindersystem ist an dem zweiten Ende des Segments des Transportsystems zumindest ein fünftes, grundsätzlich baugleiches Hochleistungssteckverbindersystem zur Ermöglichung einer sicherheitstechnischen Redundanz zugeordnet. Anders gesagt, an einem als Eisenbahnwagon ausgeführtem Segment befinden sich gemäß dem Stromübertragungssystem an dem ersten Ende des Segments zumindest das erste Hochleistungssteckverbindersystem und das vierte Hochleistungssteckverbindersystem. An dem, dem ersten Ende gegenüberstehenden zweiten Ende des Segments sind zumindest das dritte Hochleistungssteckverbindersystem und das fünfte Hochleistungssteckverbindersystem positioniert. Zumindest das zweite Hochleistungssteckverbindersystem wird in einem Bereich zwischen dem ersten Ende und dem zweiten Ende mit dem Segment verbunden. In manchen Fällen kann es sinnvoll sein, zumindest das zweite Hochleistungssteckverbindersystem als einfachen Leitungsverbinder einzusetzen, oder gar auszulassen.

Mit "sicherheitstechnischer Redundanz" ist gemeint, dass ein Hochleistungssteckverbindersystem dazu ausgelegt ist, die zu übertragende elektrische Leistung eines anderen, eingesetzten Hochleistungssteckverbindersystems aufzunehmen und zu bewältigen, für den Fall, dass dieser Ausfällt. Anders gesagt kann ein Hochleistungssteckverbindersystem zumindest kurzfristig die Aufgaben eines weiteren eingesetzten Hochleistungssteckverbindersystems übernehmen. Diese Eigenschaft wird besonders im schienengebundenen Verkehr gefordert, da Ausfälle auf einer Trasse weitrechende Folgen haben und daher weitestgehend verhindert werden müssen.

Eine weitere Ausführungsform sieht ein Stromübertragungssystem vor, wobei zumindest das zweite Hochleistungssteckverbindersystem zumindest eine Leitung zum Betreiben zumindest eines elektrischen Verbrauchers des Segments des Transportsystems aufnimmt. Auf diese Weise kann bei Personenzügen/ Personenwagons beispielsweise eine Temperaturregelanlage, beispielsweise eine Heizung und/ oder eine Klimaanlage betrieben werden. Im Fall von Gütertransportwagons kann beispielsweise zumindest ein elektrischer Stellmotor und/ oder ein vergleichbarer Aktor versorgt werden.

In einer besonders sinnvollen Ausführungsform wird zumindest ein von außerhalb zumindest eines Hochleistungssteckverbindersystems sichtbarer Abschnitt des Stromübertragungssystems, insbesondere zumindest ein Bauteil des Hochleistungssteckverbindersystems mit zumindest einem thermochromen Element versehen. Durch das thermochrome Element wird zumindest die Betriebstemperatur optisch visualisiert. Insbesondere wird ein thermochromes Element eingesetzt, dass zumindest bei einer erhöhten Temperatur einen einmaligen Farbwechsel durchführt. In einer geschickten Weiterentwicklung wird dem thermochromen Element ein elektrischer und/ oder elektromagnetischer Signalgeber zugeordnet. Dabei ist ein Signalgeber insbesondere als RFID-Transponder ausgeführt. Besonders bevorzugt wird auch bei dem Einsatz eines RFID-Transponders ein darin eingebrachtes Element zur irreversiblen Veränderung der übermittelten Daten. So kann beispielsweise ein hitzeempfindliches Element in dem Transponder enthalten sein. Als alternative wird ein RFID-Transponder mit einem hitzeempfindlichen Element verbunden. Sobald das hitzeempfindliche Element aktiviert und/ oder zerstört ist, beispielsweise durch zu hohe Temperatur, wird das Signal des RFID-Transponders verändert, sodass eine Fehlfunktion nachgewiesen werden kann.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines erfindungsgemäßen Hochleistungssteckverbindersystems in einer Ansicht von "oben";
- Fig. 2: eine perspektivische Darstellung eines erfindungsgemäßen Hochleistungssteckverbindersystems in einer Ansicht von "unten"
- Fig. 3: eine Schnittdarstellung durch eine etwa mittig positionierte, horizontal ausgerichtete Ebene eines erfindungsgemäßen Hochleistungssteckverbindersystems;
- Fig. 4: eine Schnittdarstellung durch eine etwa mittig positionierte, vertikal ausgerichtete Ebene eines erfindungsgemäßen Hochleistungssteckverbindersystems;
- Fig. 5: Ein erfindungsgemäßes Stromverteilersystem in einer Ansicht unterhalb eines damit ausgerüsteten Wagons.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

Hochgestellte Buchstaben und Ziffern sowie Tiefgestellte Buchstaben und Ziffern nach einem Bezugszeichen dienen der Orientierung und sollen grundsätzlich der vereinfachten Übersicht dienen.

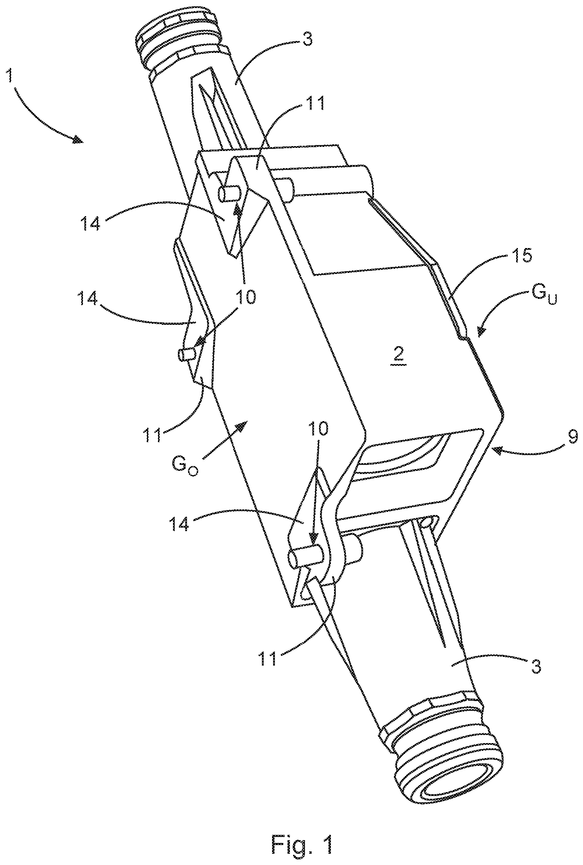

Die Fig. 1 zeigt ein erfindungsgemäßes Hochleistungssteckverbindersystem 1 in einer perspektivischen Ansicht von "oben". Das dargestellte Hochleistungssteckverbindersystem 1 weist in diesem Fall ein Kabelanschlussgehäuse 2 und zwei daran befestigten Hochleistungssteckverbinder 3 auf. Die Hochleistungssteckverbinder 3 sind in Anschlussbereiche 9 des Kabelanschlussgehäuses 2 eingeführt und dort mit Schraubverbindungen an dem Kabelanschlussgehäuse 2 fixiert. Dem Fachmann ergeben sich alternative Befestigungsmöglichkeiten eines Hochleistungssteckverbinders 3 an einem Kabelanschlussgehäuse 2. Beispielsweise kann ein Hochleistungssteckverbinder 3 mit einem Rasthakenmechanismus, wie einem Push-Pull-Mechanismus ausgestattet sein. Ein Hochleistungssteckverbinder 3 kann mit einer Überwurfmutter ausgestattet sein, welche an ein Außengewinde angeschraubt wird, wobei das Außengewinde an dem Anschlussbereich 9 des Kabelanschlussgehäuse 2 angeordnet ist. Weiterhin kann ein Hochleistungssteckverbinder 3 mit einer Gewindehülse versehen werden, um in ein im Anschlussbereich 9 angeordnetes Innengewinde eingeschraubt zu werden. Darüber können auch Haltebügel, Hebel, Keile Spannelemente wie Spanneisen oder konischen Spannbuchsen (z.B. Taper-Buchsen) eingesetzt werden. Die Gehäuseoberseite (Go) des Kabelanschlussgehäuse 2 verläuft konkav, wobei die Gehäuseoberseite (Go) entlang der Längsachse des Kabelanschlussgehäuses 2 die höchste Auslenkung aufweist. Entlang des Grundkörpers des Kabelanschlussgehäuses 2 sind Fortsätze 11 zu erkennen. Diese Fortsätze 11 sind mit Ausnehmungen 10 versehen. Diese Ausnehmungen 10 sind als Durchgangsbohrungen, bzw. Durchgangslöcher ausgeführt. In der Darstellung Fig. 1 sind diese Ausnehmungen 10 bereits mit Verbindungselementen, genauer gesagt mit Schrauben versehen. Diese werden in eine Trägerstruktur, beispielsweise das Chassis oder eine Bodenplatte eines Eisenbahnwagons eingeschraubt, bzw. mit Gewindeelementen verbunden. Die Fortsätze 11 sind, anders als der Großteil der Gehäuseoberseite (Go), nicht konkav, sondern zumindest grundsätzlich als plane Kontaktflächen 14 ausgeführt. Um eine besonders vorteilhafte elektrische Masseverbindung zu erreichen werden diese planen Kontaktflächen 14 mit elektrisch leitenden Oberflächen des tragenden Bauteils verbunden. Zum Schutz vor Schmutz und Witterung wird diese Kontaktierung im Nachgang versiegelt, beispielsweise durch eine Lackierung. Darüber hinaus sind die Kontaktflächen 14 dazu vorgesehen, entstehende Wärme des Kabelanschlussgehäuses 2 abzuleiten. In der Darstellung Fig. 1 ragen die Kontaktflächen 14 der Fortsätze 11 über die höchste Auslenkung der konkav ausgeführten Gehäuseoberseite (Go) hinaus. Damit wird zum einen erreicht, dass entstehende Wärme durch einen ermöglichten Luftzug während der Fahrt abgeführt wird. Weiterhin wird die Reinigung vereinfacht, da Schmutz, Staub und Wasser einfach zu den Seiten des Kabelanschlussgehäuses 2 ablaufen kann, bzw. abgeführt werden kann.

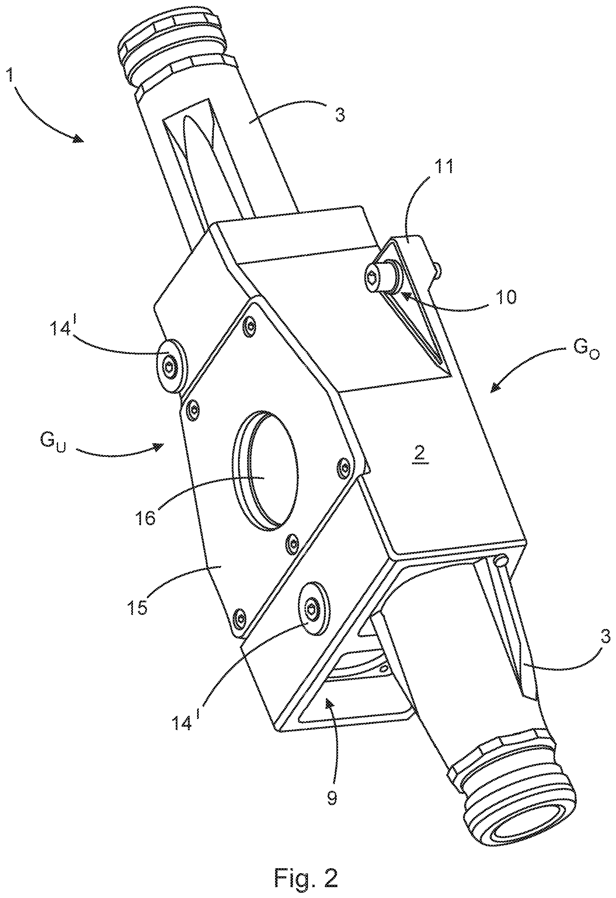

Die Fig. 2 zeigt das erfindungsgemäße Hochleistungssteckverbindersystem 1 in einer Ansicht von "unten". Das Kabelanschlussgehäuse 2 ist auch in der Fig. 2 mit zwei Hochleistungssteckverbindern 3 verbunden. Ebenso wie in der Fig. 1 ist in der Fig. 2 ein Anschlussbereich 9 für einen weiteren Hochleistungssteckverbinder 3 unbelegt dargestellt. Die Ausnehmung 10 in dem Fortsatz 11 ist bereits mit einem Verbindungselement durchdrungen. Das Verbindungselement, wie die dargestellte Schraube, dient beispielsweise zur Fixierung des Kabelanschlussgehäuses 2 an einer Trägerstruktur. Weiterhin ist ein Verbindungselement dazu ausgebildet, eine elektrische Masseverbindung herzustellen. Die Gehäuseunterseite Gu weist zwei Kontaktflächen 14 auf. Diese Kontaktflächen 14 sind insbesondere für den Anschluss zumindest eines Masseleiters ausgebildet. Als Masseleiter wird oftmals ein Kupfergewebeband eingesetzt. Die Gehäuseunterseite Gu ist mit einem Gehäusedeckel 15 versehen. Durch den Gehäusedeckel 15 kann zu Montage und/ oder Wartungszwecken der Innenraum 7 erreicht werden. Der Gehäusedeckel 15 ist darüber hinaus mit einer Vertiefung 16 ausgeformt. Diese Vertiefung 16 wiederum ist derart ausgeformt, dass eine Verschlusskappe 13 zumindest zu einem geringen Anteil in der Vertiefung 16 aufgenommen werden kann. Idealerweise kann die Verschlusskappe 13 mit Verbindungselementen, beispielsweise Schrauben, mit dem Gehäusedeckel 15 lösbar verbunden werden.

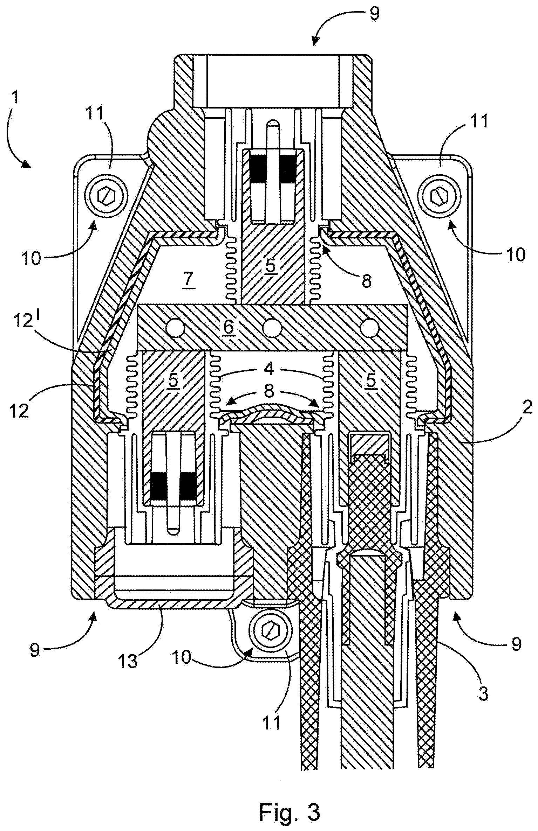

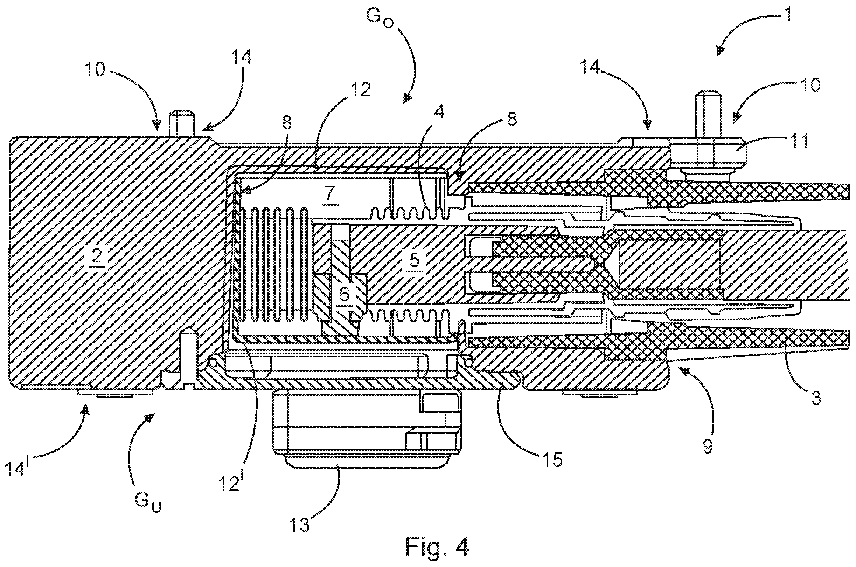

Eine Ansicht in den Innenraum 7 ermöglichen die Fig. 3, sowie die Fig. 4. Diese Ansichten zeigen im Fall der Fig. 3 ein Hochleistungssteckverbindersystem 1 in einer horizontalen Schnittdarstellung und im Fall der Fig. 4 ein Hochleistungssteckverbindersystem 1 in einer vertikalen Schnittdarstellung. Die Fig. 3 zeigt das Kabelanschlussgehäuse 2 mit einem Hochleistungssteckverbinder 3 in einem Anschlussbereich 9 und einer Verschlusskappe 13 in einem benachbarten Anschlussbereich 9, während ein Anschlussbereich 9 unbenutzt dargestellt ist. Im Innenraum 7 sind drei einzeln positionierte Isolierkörper 4 angeordnet. Im dargestellten Fall wird ganz grob die Form eines (auf dem Kopf stehenden) Y angenommen. Die Isolierkörper 4 verlaufen durch dazugehörige Gehäusedurchbrüche 8 und stellen somit eine Verbindung zwischen Innenraum 7 und den jeweiligen Anschlussbereichen 9 her. Weiter nehmen die Isolierkörper 4 jeweils einen Hochleistungskontakt 5 auf. Die Hochleistungskontakte 5 werden durch die Isolierkörper 4 und durch die Gehäusedurchbrüche 8 in den jeweiligen Anschlussbereich 9 geführt. Zur Herstellung der elektrischen Verbindung werden die Hochleistungskontakte 5 etwa mittig des Innenraums 7 mit einer Schiene 6 fixiert. In der Dargestellten Ausführungsform werden die Hochleistungskontakte 5 mit Schrauben an der Schiene 6 befestigt. Die Darstellungen Fig. 3 und Fig. 4 zeigen auch, dass kein elektrisch leitendes Bauteil mit dem Kabelanschlussgehäuse 2 in direktem Kontakt steht. Durch diese Ausführung können trotz besonders kompakter Bauweise des Hochleistungssteckverbindersystems 1 die notwendigen Luftstrecken und Kriechstrecken eingehalten werden. Um weiterhin den Schutz zu erhöhen ist der Innenraum 7 mit zwei ineinander verschachtelten Isolierschalen 12 und 12' versehen. Dazu ist die Isolierschale 12' geringfügig kleiner ausgestaltet als die Isolierschale 12, sodass die Isolierschale 12' in die Isolierschale 12 eingesetzt wird.

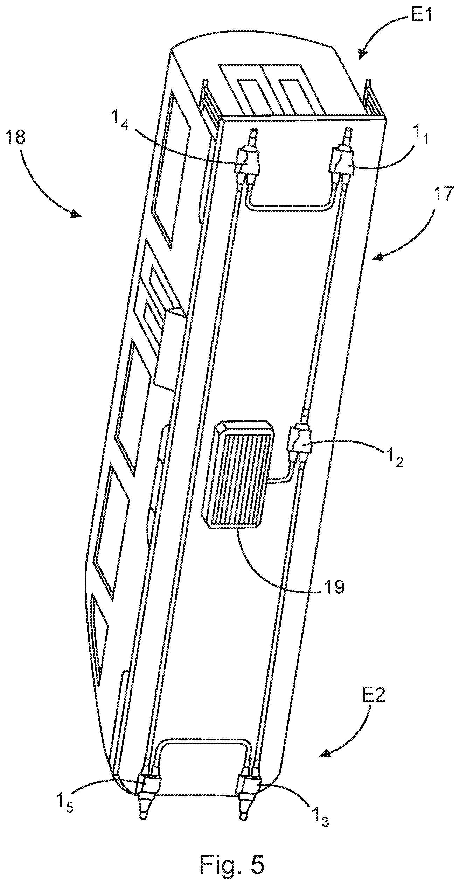

Ein die erfindungsgemäßen Hochleistungssteckverbindersysteme 1 umfassendes Stromübertragungssystem 17 ist in der Fig. 5 dargestellt. Dazu wird ein erstes Hochleistungssteckverbindersystem 1₁ an einem ersten Ende E1 eines Segments 18 eines Transportsystems befestigt. Bei dem Transportsystem handelt es sich beispielhaft um einen Personenbeförderungswagon. Ein erstes Hochleistungssteckverbindersystem 1₁ wird mit einem zweiten, baugleichen Hochleistungssteckverbindersystem 1₂ verbunden. Das zweite Hochleistungssteckverbindersystem 1₂ wird mit einem elektrischen Leiter mit einem dritten Hochleistungssteckverbinder 1₃ verbunden. Der erste Hochleistungssteckverbindersystem 1₁ steht zur Herstellung einer Redundanz mit einem vierten Hochleistungssteckverbindersystem 1₄ in Verbindung. Dieser vierte Hochleistungssteckverbindersystem 1₄ ist direkt mit einem fünften Hochleistungssteckverbindersystem 1₅ elektrisch leitend verknüpft. Weiterhin aus Gründen der Redundanz stehen die Hochleistungssteckverbindersysteme 1₅ und 1₃ in elektrisch leitendem Kontakt. Somit befinden sich an dem ersten Ende E1 des Segments 18 die Hochleistungssteckverbindersysteme 1₁ und 1₄. An dem gegenüberliegenden Ende E2 des Segments 18 befinden sich die Hochleistungssteckverbindersysteme 1₃ und 1₅. Zwischen den Beiden Enden E1 und E2 des Segments 18 befindet sich ein elektrischer Verbraucher 19. Dieser elektrische Verbraucher 19 kann beispielsweise eine Temperaturregelanlage sein, insbesondere eine Klimaanlage oder eine elektrische Heizungsanlage. Der elektrische Verbraucher 19 ist durch eine elektrische Leitung mit dem Hochleistungssteckverbindersystem 1₂ verbunden. Die Hochleistungssteckverbindersysteme 1 sind dabei baugleich und sind beliebig untereinander austauschbar. Die Hochleistungssteckverbindersysteme 1₁, 1₂ und 1₃ bilden dabei eine elektrische Verbindung von dem ersten Ende E1 des Segments 18 bis zu dem zweiten Ende E2 des Segments 18. Dabei wirkt das Hochleistungssteckverbindersystem 1₂ nicht nur als elektrische Verbindung, sondern auch als Abzweigmöglichkeit zur Versorgung eines elektrischen Verbrauchers. Die Hochleistungssteckverbindersystem 1₄ und 1₅ bilden eine weitere elektrische Verbindung von dem ersten Ende E1 des Segments 18 bis zu dem zweiten Ende E2 des Segments 18.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind.

### Bezugszeichenliste

- 1: Hochleistungssteckverbindersystem
- 2: Kabelanschlussgehäuse
- 3: Hochleistungssteckverbinder
- 4: Isolierkörper
- 5: Hochleistungskontakt
- 6: Schiene
- 7: Innenraum
- 8: Gehäusedurchbruch
- 9: Anschlussbereich
- 10: Ausnehmung
- 11: Fortsatz
- 12, 12': Isolierschale
- 13: Verschlusskappe
- 14, 14': Kontaktfläche
- 15: Gehäusedeckel
- 16: Vertiefung
- 17: Stromübertragungssystem
- 18: Segment
- 19: Verbraucher
- Go: Gehäuseoberseite
- Gu: Gehäuseunterseite
- E1: Erstes Ende des Segments
- E2: Zweites Ende des Segments

## Patentansprüche

1. Hochleistungssteckverbindersystem (1) aufweisend ein Kabelanschlussgehäuse (2) zum Anschluss von zumindest zwei elektrischen Hochleistungssteckverbindern (3) zur Übertragung und/oder Verteilung hoher elektrischer Stromstärken und/oder hoher elektrischer Spannungen,
wobei das Kabelanschlussgehäuse (2) zumindest zwei Isolierkörper (4) zur Aufnahme zumindest je eines Hochleistungskontaktes (5) und zumindest eine elektrisch leitfähige Schiene (6) in einem Innenraum (7) umfasst,
wobei die Schiene (6) dazu ausgelegt ist, eine elektrisch leitende Verbindung zwischen den zumindest zwei Hochleistungskontakten (5) herzustellen und
wobei die Isolierkörper (4) zumindest teilweise durch je einen Gehäusedurchbruch (8) aus dem Innenraum (7) in einen Anschlussbereich (9) des Kabelanschlussgehäuses (2) ragen, wobei der Anschlussbereich (9) zur Aufnahme der Hochleistungssteckverbinder (3) ausgebildet ist,
**dadurch gekennzeichnet, dass** das Kabelanschlussgehäuse (2) mit einer im Wesentlichen konkav ausgeformten Gehäuseoberseite (GO) ausgeführt ist und der Innenraum (7) zumindest eine erste Isolierschale (12) und eine zweite Isolierschale (12') aufweist, wobei die erste Isolierschale (12) und die zweite Isolierschale (12') sich entlang zumindest einer Seitenwand überlagern, wobei das Kabelanschlussgehäuse (2) zumindest auf einer Gehäuseoberseite (GO) mit zumindest zwei grundsätzlich planen Kontaktflächen (14) ausgebildet ist und die Kontaktflächen (14) zumindest eine Höhe einer Ebene erreichen, welche aus einer grundsätzlich parallel zum Kabelanschlussgehäuse (2) verlaufenden Geraden und durch einen höchsten Punkt der konkaven Auslenkung der Gehäuseoberseite (GO) gebildet wird und wobei eine Gehäuseunterseite (GU) mit zumindest einer grundsätzlich planen Kontaktfläche (14') versehen ist und die grundsätzlich plane Kontaktfläche (14') zum Anschluss eines Masseleiters ausgeformt ist.

2. Hochleistungssteckverbindersystem (1) nach Anspruch 1, **dadurch gekennzeichnet, dass**
das Kabelanschlussgehäuse (2) über zumindest zwei Ausnehmungen (10) verfügt, welche es ermöglichen, dass Kabelanschlussgehäuse (2) mit einer Trägerstruktur zu verbinden.

3. Hochleistungssteckverbindersystem (1) nach dem vorstehenden Anspruch, **dadurch gekennzeichnet, dass**
die Ausnehmungen (10) jeweils innerhalb zumindest einem, außen an dem Kabelanschlussgehäuse (2) befindlichen Fortsatz (11) angeordnet sind.

4. Hochleistungssteckverbindersystem (1) nach einem der vorstehenden Ansprüche, **dadurch gekennzeichnet, dass**
das Kabelanschlussgehäuse (2) zumindest eine Verschlusskappe (13) zum mediendichten Verschließen eines Anschlussbereichs (9) aufnimmt.

5. Hochleistungssteckverbindersystem (1) nach einem der vorstehenden Ansprüche, **dadurch gekennzeichnet, dass**
das Kabelanschlussgehäuse (2) einen Gehäusedeckel (15) zum mediendichten Verschließen des Innenraums (7) aufweist.

6. Hochleistungssteckverbindersystem (1) nach einem der vorstehenden Ansprüche, **dadurch gekennzeichnet, dass**
der Gehäusedeckel (15) eine Vertiefung (16) zur Aufnahme einer Verschlusskappe (13) aufweist.

7. Hochleistungssteckverbindersystem (1) nach einem der vorstehenden Ansprüche, **dadurch gekennzeichnet, dass**
die Gehäuseunterseite (GU) aus zumindest einer im Wesentlichen rechteckigen Grundform gebildet ist.

8. Hochleistungssteckverbindersystem (1) nach einem der vorstehenden Ansprüche, **dadurch gekennzeichnet, dass**
das Hochleistungssteckverbindersystem (1) zumindest ein thermochromes Element aufweist.

9. Hochleistungssteckverbindersystem (1) nach Anspruch 8, **dadurch gekennzeichnet, dass**
das thermochrome Element in einem von außerhalb des Hochleistungssteckverbindersystems (1) sichtbaren Bereich angeordnet ist.

10. Stromübertragungssystem (17) aufweisend zumindest fünf Hochleistungssteckverbindersysteme nach Anspruch 1, wobei zumindest ein erstes der Hochleistungssteckverbindersysteme (11) an einem ersten Ende (E1) eines Segments (18) eines Transportsystems anbringbar ist und zumindest ein zweites der Hochleistungssteckverbindersysteme (12) in etwa einem mittigen Bereich des Segments (18) zuordenbar ist, **dadurch gekennzeichnet, dass**
zumindest ein drittes der Hochleistungssteckverbindersysteme (13) an einem zweiten Ende (E2) des Segments (18) des Transportsystems anbringbar ist, wobei zumindest dem ersten Hochleistungssteckverbindersystem (11) an dem ersten Ende (E1) des Segments (18) des Transportsystems zumindest ein viertes, im Wesentlichen baugleiches der Hochleistungssteckverbindersysteme (14) zur Ermöglichung einer sicherheitstechnischen Redundanz zugeordnet ist und zumindest dem dritten Hochleistungssteckverbindersystem (13) an dem zweiten Ende (E2) des Segments (18) des Transportsystems zumindest ein fünftes, im Wesentlichen baugleiches der Hochleistungssteckverbindersysteme (15) zur Ermöglichung einer sicherheitstechnischen Redundanz zugeordnet ist und wobei zumindest eines der Hochleistungssteckverbindersysteme (1) mit zumindest einem thermochromen Element versehen ist.

11. Stromübertragungssystem (17) nach Anspruch 10, **dadurch gekennzeichnet, dass**
zumindest das zweite Hochleistungssteckverbindersystem (12) zumindest eine Leitung des Stromübertragungssystems (17) zum Betreiben zumindest eines elektrischen Verbrauchers (19) des Segments (18) des Transportsystems aufnimmt.

12. Stromübertragungssystem (17) nach einem der Ansprüche 10 und 11, **dadurch gekennzeichnet, dass**
zumindest das erste Hochleistungssteckverbindersystem (11) und das dritte Hochleistungssteckverbindersystem (13) durch zumindest eine elektrische Leitung des Stromübertragungssystems in Verbindung stehen.

13. Stromübertragungssystem (17) nach einem der Ansprüche 10 bis 12, **dadurch gekennzeichnet, dass**
zumindest das vierte Hochleistungssteckverbindersystem (14) und das fünfte Hochleistungssteckverbindersystem (15) durch zumindest eine elektrische Leitung des Stromübertragungssystems in Verbindung stehen.

14. Stromübertragungssystem (17) nach einem der Ansprüche 10 bis 13, **dadurch gekennzeichnet, dass**
zumindest das erste Hochleistungssteckverbindersystem (11) und das dritte Hochleistungssteckverbindersystem (13) durch zumindest jeweils eine elektrische Leitung des Stromübertragungssystems mit dem zweiten Hochleistungssteckverbinder (12) in Verbindung stehen.

## Claims

1. A high-power plug connection system (1) comprising a cable connection housing (2) for connecting at least two electrical high-power plug connectors (3) for transmitting and/or distributing high electrical currents strengths and/or high electrical voltages,
wherein the cable connection housing (2) comprises at least two insulating bodies (4) for accommodating at least in each case one of at least two high-power contact (5) and at least one electrically conductive busbar (6) in an interior (7),
wherein the busbar (6) is designed to establish an electrically conductive connection between the at least two high-power contacts (5), and
wherein the insulating bodies (4) project at least partially through in each case one housing perforation (8) from the interior (7) into a connection region (9) of the cable connection housing (2), wherein the connection region (9) is designed to receive the high-power plug connectors (3),
**characterized in that** the cable connection housing (2) is designed with a essentially concavely shaped housing top side (GO) and the interior (7) has at least one first insulating shell (12) and one second insulating shell (12'), wherein the first insulating shell (12) and the second insulating shell (12') overlap each other along at least one side wall, wherein the cable connection housing (2) is provided at least on a housing top side (GO) with at least two fundamentally plane contact surfaces (14) and the contact surfaces (14) reach at least a height of a plane which is formed by a straight line running fundamentally parallel to the cable connection housing (2) and by a highest point of the concave deflection of the housing top side (GO), and wherein a housing underside (GU) is provided with at least one fundamentally plane contact surface (14') and the fundamentally plane contact surface (14') is formed for connection of a ground conductor.

2. The high-power plug connection system (1) according to claim 1, **characterized in that** the cable connection housing (2) has at least two recesses (10) which make it possible to connect the cable connection housing (2) to a supporting structure.

3. The high-power plug connection system (1) according to the preceding claim, **characterized in that** the recesses (10) are each arranged inside at least one protrusion (11) situated on an outside of the cable connection housing (2).

4. The high-power plug connection system (1) according to any one of the preceding claims, **characterized in that** the cable connection housing (2) receives at least one closure cap (13) for closing a connection region (9) so that it is media-tight.

5. The high-power plug connection system (1) according to any one of the preceding claims, **characterized in that** the cable connection housing (2) has a housing cover (15) for closing the interior (7) so that it is media-tight.

6. The high-power plug connection system (1) according to any one of the preceding claims, **characterized in that** the housing cover (15) has a depression (16) for receiving a closure cap (13).

7. The high-power plug connection system (1) according to any one of the preceding claims, **characterized in that** the housing underside (GU) is formed from at least one essentially rectangular basic shape.

8. The high-power plug connection system (1) according to any one of the preceding claims, **characterized in that** the high-power plug connection system (1) has at least one thermochromic element.

9. The high-power plug connection system (1) according to claim 8, **characterized in that** the thermochromic element is arranged in a region visible from outside the high-power plug connection system (1).

10. A current transmission system (17) having at least five high-power plug connection systems according to claim 1, wherein at least one first of the high-power plug connection systems (11) is attachable to a first end (E1) of a segment (18) of a transportation system and at least one second of the high-power plug connection systems (1₂) is assignable to an approximately central region of the segment (18), **characterized in that**
at least one third of the high-power plug connection systems (13) is attachable to a second end (E2) of the segment (18) of the transportation system, wherein
at least one fourth high-power plug connection system (14) with essentially the same structure is assigned to at least the first high-power plug connection system (11) at the first end (E1) of the segment (18) of the transportation system in order to enable safety-related redundancy, and at least one fifth high-power plug connection system (15) with essentially the same structure is assigned to at least the third high-power plug connection system (13) at the second end (E2) of the segment (18) of the transportation system in order to enable safety-related redundancy, and wherein at least one of the high-power plug connection systems (1) is provided with at least one thermochromic element.

11. The current transmission system (17) according to claim 10, **characterized in that** at least the second high-power plug connection system (12) receives at least one cable of the current transmission system (17) for operating at least one electrical consumer (19) of the segment (18) of the transportation system.

12. The current transmission system (17) according to any one of claims 10 and 11, **characterized in that** at least the first high-power plug connection system (11) and the third high-power plug connection system (13) are connected by at least one electrical cable of the power transmission system.

13. The current transmission system (17) according to any one of claims 10 to 12, **characterized in that** at least the fourth high-power plug connection system (14) and the fifth high-power plug connection system (15) are connected by at least one electrical cable of the power transmission system.

14. The current transmission system (17) according to any one of claims 10 to 13, **characterized in that** at least the first high-power plug connection system (11) and the third high-power plug connection system (13) are connected to the second high-power plug connector (12) by in each case at least one electrical cable of the power transmission system.

## Revendications

1. Système de connecteurs enfichables à haute puissance (1) présentant un boîtier de raccordement de câble (2) pour le raccordement d'au moins deux connecteurs enfichables à haute puissance électriques (3) pour la transmission et/ou la distribution d'intensités de courant électriques élevées et/ou de tensions électriques élevées,
dans lequel le boîtier de raccordement de câble (2) comprend au moins deux corps isolants (4) destinés à recevoir chacun au moins un contact à haute puissance (5) et au moins un rail électriquement conducteur (6) dans un espace intérieur (7),
dans lequel le rail (6) est conçu pour établir une connexion électriquement conductrice entre les au moins deux contacts à haute puissance (5) et
dans lequel les corps isolants (4) dépassent au moins en partie à travers un ajour de boîtier (8) de l'espace intérieur (7) dans une zone de raccordement (9) du boîtier de raccordement de câble (2), dans lequel la zone de raccordement (9) est réalisée pour recevoir les connecteurs enfichables à haute puissance (3),
**caractérisé en ce que** le boîtier de raccordement de câble (2) est réalisé avec une face supérieure de boîtier (GO) de forme sensiblement concave et l'espace intérieur (7) présente au moins une première coque isolante (12) et une deuxième coque isolante (12'), dans lequel la première coque isolante (12) et la deuxième coque isolante (12') se superposent le long d'au moins une paroi latérale, dans lequel le boîtier de raccordement de câble (2) est réalisé au moins sur une face supérieure de boîtier (GO) avec au moins deux surfaces de contact sensiblement planes (14) et les surfaces de contact (14) atteignent au moins la hauteur d'un plan qui est formé à partir d'une droite s'étendant sensiblement parallèlement au boîtier de raccordement de câble (2) et par un point le plus haut de la déviation concave de la face supérieure de boîtier (GO), et une face inférieure de boîtier (GU) étant pourvue d'au moins une surface de contact principalement plane (14') et la surface de contact principalement plane (14') est formée pour le raccordement d'un conducteur de terre.

2. Système de connecteurs enfichables à haute puissance (1) selon la revendication 1, **caractérisé en ce que**
le boîtier de raccordement de câble (2) dispose d'au moins deux évidements (10) qui permettent de relier le boîtier de raccordement de câble (2) à une structure de support.

3. Système de connecteurs enfichables à haute puissance (1) selon la revendication précédente, **caractérisé en ce que**
les évidements (10) sont disposés chacun à l'intérieur d'au moins un prolongement (11) se trouvant à l'extérieur sur le boîtier de raccordement de câble (2).

4. Système de connecteurs enfichables à haute puissance (1) selon l'une quelconque des revendications précédentes, **caractérisé en ce que**
le boîtier de raccordement de câble (2) reçoit au moins un capuchon de fermeture (13) destiné à fermer, de manière étanche aux milieux, une zone de raccordement (9).

5. Système de connecteurs enfichables à haute puissance (1) selon l'une quelconque des revendications précédentes, **caractérisé en ce que**
le boîtier de raccordement de câble (2) présente un couvercle de boîtier (15) destiné à fermer de manière étanche aux fluides l'espace intérieur (7).

6. Système de connecteurs enfichables à haute puissance (1) selon l'une quelconque des revendications précédentes, **caractérisé en ce que**
le couvercle de boîtier (15) présente un renfoncement (16) destiné à recevoir un capuchon de fermeture (13).

7. Système de connecteurs enfichables à haute puissance (1) selon l'une quelconque des revendications précédentes, **caractérisé en ce que**
la face inférieure de boîtier (GU) est formée à partir d'au moins une forme de base sensiblement rectangulaire.

8. Système de connecteurs enfichables à haute puissance (1) selon l'une quelconque des revendications précédentes, **caractérisé en ce que**
le système de connecteurs enfichables à haute puissance (1) présente au moins un élément thermochromique.

9. Système de connecteurs enfichables à haute puissance (1) selon la revendication 8, **caractérisé en ce que**
l'élément thermochromique est disposé dans une zone visible depuis l'extérieur du système de connecteurs enfichables à haute puissance (1).

10. Système de transmission de courant (17) présentant au moins cinq systèmes de connecteurs enfichables à haute puissance selon la revendication 1, dans lequel au moins un premier (11) des systèmes de connecteurs enfichables à haute puissance peut être installé sur une première extrémité (E1) d'un segment (18) d'un système de transport et au moins un deuxième (12) des systèmes de connecteurs enfichables à haute puissance peut être associé à une zone approximativement centrale du segment (18), **caractérisé en ce que**
au moins un troisième (13) des systèmes de connecteurs enfichables à haute puissance peut être installé sur une deuxième extrémité (E2) du segment (18) du système de transport, dans lequel au moins un quatrième système de connecteurs enfichables à haute puissance (14), de structure sensiblement identique, des systèmes de connecteurs enfichables à haute puissance, est associé au premier système de connecteurs enfichables à haute puissance (11) sur la première extrémité (E1) du segment (18) du système de transport pour permettre une redondance technique en matière de sécurité et au moins un cinquième système de connecteurs enfichables à haute puissance (15), de structure sensiblement identique des systèmes de connecteurs enfichables à haute puissance, est associé au moins au troisième système de connecteurs enfichables à haute puissance (13) sur la deuxième extrémité (E2) du segment (18) du système de transport pour permettre une redondance technique en matière de sécurité et dans lequel au moins un des systèmes de connecteurs enfichables à haute puissance (1) est pourvu d'au moins un élément thermochromique.

11. Système de transmission de courant (17) selon la revendication 10, **caractérisé en ce que**
au moins le deuxième système de connecteurs enfichables à haute puissance (12) reçoit au moins une ligne du système de transmission de courant (17) pour faire fonctionner au moins un consommateur électrique (19) du segment (18) du système de transport.

12. Système de transmission de courant (17) selon l'une quelconque des revendications 10 et 11, **caractérisé en ce que**
au moins le premier système de connecteurs enfichables à haute puissance (11) et le troisième système de connecteurs enfichables à haute puissance (13) sont reliés par au moins une ligne électrique du système de transmission de courant.

13. Système de transmission de courant (17) selon l'une quelconque des revendications 10 à 12, **caractérisé en ce que**
au moins le quatrième système de connecteurs enfichables à haute puissance (14) et le cinquième système de connecteurs enfichables à haute puissance (15) sont reliés par au moins une ligne électrique du système de transmission de courant.

14. Système de transmission de courant (17) selon l'une quelconque des revendications 10 à 13, **caractérisé en ce que**
au moins le premier système de connecteurs enfichables à haute puissance (11) et le troisième système de connecteurs enfichables à haute puissance (13) sont reliés au deuxième connecteur enfichable à haute puissance (12) par au moins respectivement une ligne électrique du système de transmission de courant.
